# EUROPEAN PATENT SPECIFICATION

(11) **EP 1 178 906 B1**
(45) Date of publication and mention of the grant of the patent: **12.05.2004**
(21) Application number: 99923250.7
(22) Date of filing: 20.05.1999
(51) Int. Cl.: B60R 22/34, B60R 22/28, B60R 22/44, B60R 22/46

(54) **SEATBELT RETRACTOR**
SICHERHEITSGURTAUFROLLER
DISPOSITIF DE RAPPEL DE CEINTURE DE SECURITE

(43) Date of publication of application: 13.02.2002
(73) Proprietor: Breed Automotive Technology, Inc., Lakeland, FL 33807-3050 (US)
(72) Inventor: SPECHT, Martin, D-82340 Feldafing (DE)
(74) Representative: Nöth, Heinz
(86) International application number: PCT/US1999/011140
(87) International publication number: WO 2000/071394

(56) References cited:
- DE-A- 2 220 669
- DE-A- 4 302 042
- DE-A- 19 731 689
- DE-C- 19 604 483
- GB-A- 2 331 050
- US-A- 4 546 933
- PATENT ABSTRACTS OF JAPAN vol. 1998, no. 11, 30 September 1998 (1998-09-30) & JP 10 167002 A (TAKATA KK), 23 June 1998 (1998-06-23)

## Description

The invention concerns a seatbelt retractor as set forth in the preamble of claim 1.

In a seatbelt retractor of that kind which shows the features of the preamble of claim 1 known from DE 41 12 620 Al, the winding-on spring is so acted upon by an electric motor that, after the seatbelt is fitted, the fitting force applied to the seatbelt webbing becomes less than that applied to the seatbelt webbing when it is pulled out into the parking position. For that purpose the electric motor acts on the rotatably mounted spring casing on the seatbelt retractor.

In a further seatbelt retractor known from DE 27 42 676 an electric motor is provided at the spring side of the seatbelt retractor, and acts on the drive spring by a clutch. That makes it possible to adjust the return force of the drive spring. The clutch can be in the form of a slipping clutch in order to limit the torque transmitted by the electric motor (control motor) to a maximum value.

GB-A-2 331 050 discloses a seat belt retractor with a torsion bar located in a bore of the belt reel. The torsion bar has an axial extension which acts as a spring arbor engaged with the drive spring. The second end of the torsion bar is secured to a lock wheel assembly. DE-A-27 42 676 discloses a seat belt retractor in which the torque of an electric motor is transmitted by a friction clutch to one end of the drive spring.

The object of the present invention is to provide a seatbelt retractor of the kind set forth in the opening part of this specification, in which the seatbelt retractor provided with the electric motor, while being of a compact structure, performs further functions.

In accordance with the invention that object is attained by the characterizing features of claim 1.

The rotor and the stator of the electric motor are arranged in concentric relationship with the shaft of the belt reel at the spring side of the seatbelt retractor. For that purpose, for adjustment of the force of the drive spring, the rotor is rotatably connected to at least one of the two ends of the drive spring. That rotary connection is in particular a rigid rotary connection without the interposition of a slipping clutch. It is possible to provide a transmission arrangement, in particular a planetary transmission arrangement, between the rotor and the spring-engagement point.

A suitable electric motor is a flat motor as described in DE 43 02 042 A1. That electric motor which is of a flat structure has stator poles on an inwardly disposed radius and rotor poles on an outwardly disposed radius around the stator poles. The axial extent of the rotor-stator assembly is substantially smaller than the outside diameter of the rotor. A planetary transmission arrangement of a compact structure can be arranged within the stator poles, the planetary transmission arrangement being rotatably drivingly connected to the rotor. The rotary movement which is transmitted by the planetary transmission arrangement can be transmitted to the drive spring or by a clutch to.a load limiting means and/or the winding shaft. It is also possible for the rotary movement of the rotor to be transmitted directly to one of the two ends of the drive spring. Preferably, transmission is to the outwardly disposed end of the drive spring.

The specific arrangement of the components of the electric motor and a planetary transmission arrangement which is possibly advantageously integrated affords the possibility of additional functions also being implemented by the seatbelt retractor, in comparison with the state of the art. Such functions are, besides adjustment of the level of comfort involved in wearing the seatbelt webbing, by virtue of suitable adjustment of the drive spring return force, a belt pretensioning effect which can be triggered by a pre-crash sensor or emergency braking. Belt pretensioning of that kind, below the triggering threshold for full-action tensioning, gives the vehicle occupant a feeling of safety in situations involving heavy braking or in the early stage of a crash or in accident-prone road situations, in all directions of deceleration. For that purpose for example the drive spring can be wound by the electric motor to a blocked condition and the continuing torque is transmitted by the spring which has been wound to a blocked condition, to the belt reel for pretensioning the seatbelt. It is also possible for that rotary movement to be transmitted to the belt reel by an engaged clutch.

There is also the possibility of providing an adjustable load limiting means by the combination of a predetermined load limiting means which is in the form of a torsion bar with the torque furnished by the electric motor. Depending on the severity of a crash and/or vehicle occupant data (5^{th} percentile women to 95^{th} percentile men) it is then possible for the retaining force to be suitably adjusted with active belt shaft blocking for a limited degree of belt webbing extension.

The combination of the torque supplied by the electric motor with the energy absorption effect afforded by the load limiting torsion bar, when belt webbing extension is braked, can be achieved by the drive spring when wound to a blocked condition or by an engaged clutch which is operatively disposed between the rotor or the planetary transmission arrangement and the winding shaft and/or the load limiting torsion bar. The torque of the electric motor can increase or reduce the effect of energy absorption, which is predetermined by the load limiting torsion bar. This load limiting depends on the severity of the crash and the data relating to the vehicle occupants. For that purpose the electric motor can be controlled in particular by belt force characteristic curves of a performance graph (DE 196 40 842 A1 and DE 197 31 689 A1).

Advantageously, functional parts such as the load limiting torsion bar serves to support components of the electric motor, in particular the rotor. For that purpose, the torsion bar is provided with an axially extending extension portion on which the rotor is mounted. For that purpose the torsion bar is arranged in the axis of the belt reel. In addition the stator of the rotor can be mounted on the frame of the seatbelt retractor, in particular the frame limb at the spring side. Preferably the stator carrier can be formed in one piece with that frame limb.

### Brief Description of the Drawings

The invention will be described in greater detail hereinafter by means of embodiments with reference to the Figures in which:
Figure 1 shows a first embodiment,
Figure 2 shows a second embodiment,
Figure 3 shows a clutch used in the second embodiment, and
Figure 4 shows a third embodiment.

### Detailed Description of the Invention

The embodiments of seatbelt retractors shown in the Figures each have a belt reel 4 for a seatbelt (not shown). A drive spring 5 drives the belt reel in the winding-on direction in known fashion. A blocking pawl (not shown) which is actuated by an acceleration sensor can engage into a blocking tooth arrangement 17. The blocking tooth arrangement is disposed on a blocking disc 18 which in the normal winding-on and unwinding mode of operation, rotates about an axis 16, together with the belt reel 4. When the blocking pawl engages into the blocking tooth arrangement the belt reel is blocked to prevent further rotary movement thereof on a frame 9 in which the belt reel is rotatably supported.

An electric motor 1 is disposed at the spring side of the frame 9. A stator 3 of the electric motor is supported on the frame by a stator carrier 8. The stator carrier can possibly be formed in one piece with the frame. The stator 3 is arranged on an inwardly disposed radius and a rotor 2 of the electric motor is disposed on an outer radius. Poles 21 of the rotor are disposed in opposite relationship to the poles of the stator 3, in one plane. The stator carrier 8 and the stator 3 are of an annular configuration. Disposed in the interior of the annular configuration is a planetary or epicyclic transmission arrangement comprising epicyclic gears 10 which are mounted rotatably on an epicyclic gear carrier 11. The carrier is rotates about the axis 16 of the belt reel 4.

In the illustrated embodiments, disposed in the axis 16 of the belt reel 4 is a load limiting means in the form of a torsion bar 6. The torsion bar extends in the axial direction. In the proximity of the spring side, the torsion bar is non-rotatably connected to the inside of the belt reel by a positively locking connection indicated at 22. At the other side (mechanism side) of the seatbelt retractor, the torsion bar 6 is non-rotatably connected to the blocking disc 18 by a fixed mounting 19. Beside the fixed mounting the torsion bar forms with the inside of the belt reel 4 a loose mounting 20 which permits rotary movement of the belt reel with respect to the loose mounting portion formed by the torsion bar. In the normal winding-on and unwinding mode of operation of the belt reel 4, the torsion bar 6 rotates together with the belt reel about the axis 16.

In the illustrated embodiments the drive spring 5 is non-rotatably connected to the torsion bar 6 by a spring core or tongue portion 13. In normal operation the return force of the drive spring is thus transmitted by the torsion bar to the belt reel.

The torsion bar 6 has an axial extension portion 7. The rotor 2 of the electric motor 1 is rotatably mounted on the extension portion. In the illustrated embodiments the rotor is of a cap-shaped configuration. A mounting extension portion 23 which projects inwardly at the centre has on its outside a tooth arrangement forming a sun gear 12 of the planetary transmission arrangement. The epicyclic gears 10 mesh with that sun gear. To complete the planetary transmission arrangement, the stator 3 is provided at its internal periphery with a tooth arrangement forming an annular gear 24 into which the epicyclic gears 10 engage. A flat motor with integrated planetary transmission, which is used in the illustrated embodiments, is known from DE 43 02 042 A1.

The electric motor 1 which for example is in the form of a dc motor is coupled or is coupleable to the various components of the seatbelt retractor in such a way that various functions of the seatbelt retractor are suitably implemented depending on the respective situation in terms of travel movement or operation.

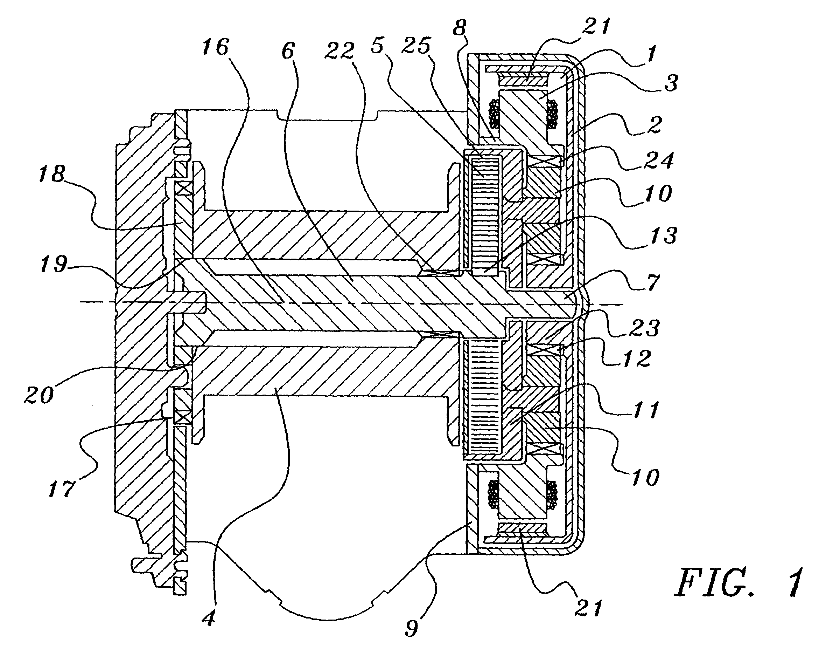

In the embodiment shown in Figure 1, the torque of the rotor 2 is transmitted by the planetary transmission arrangement and the epicyclic gear carrier 11 to an external attachment point 25 of the drive spring 5. In that way it is possible for the return force of the drive spring to be adjusted depending on the respective operating situation involved. For example, the return force of the drive spring can be increased for winding on the seatbelt webbing into the park position, thereby providing that the belt webbing is quickly wound on to the belt reel 4. To improve the level of seatbelt-wearing comfort and convenience, the return force of the drive spring 5 can be reduced when fitting the seatbelt in position and when the seatbelt is fitted.

In addition, the drive spring 5 can be wound to a blocked condition by the electric motor 1 which for example is in the form of a dc motor. For example in a pre-crash situation pretensioning of the seatbelt can be effected in that way by the torque continuing to act.

In the event of a crash, with the belt reel in a blocked condition upon forward displacement of the vehicle occupant the action of the load limiting means which is in the form of a torsion bar 6 can be suitably adjusted by variable additive torque regulation of the electric motor 1. The action of the torsion bar can be weakened or increased in that way, depending on the direction of rotation of the rotor 2. In that way, it is possible to achieve a characteristic curve-controlled load-limitation effect in dependence on severity of a crash and size and weight of the vehicle occupants. When acting as a load limiting means, the blocking disc 18 is prevented from further rotational movement by virtue of the blocking pawl engaging into the blocking tooth arrangement 17. The end of the torsion bar 6, which is connected to the blocking disc by the fixed mounting 19, is also prevented from rotating. The belt reel 4 however can rotate in the loose mounting 20 with respect to the torsion bar. As the positively locking connection 22 in the proximity of the spring side between the torsion bar and the belt reel 4 is retained, the torsion bar 6 twists in itself and acts as a load limiting means. As already mentioned, that also acts from the electric motor 1 by the drive spring 5 which is wound to a blocked condition on the end of the torsion bar which is connected to the drive spring by the spring core or tongue portion 13. Preferably the spring core or tongue portion is disposed in the immediate proximity of the positively locking connection 22 between the belt reel 4 and the torsion bar. In the embodiment shown in Figure 1 the drive spring 5 is disposed within the stator carrier 8 and between the planetary transmission arrangement and the end face, at the spring side, of the belt reel 4. The spring casing in which the drive spring is arranged can be formed in one piece with the epicyclic gear carrier 11. It can however also be produced as a separate item and non-rotatably connected to the epicyclic gear carrier. The connection between the drive spring 5 and the epicyclic gear carrier is such that, as already mentioned, the torque produced by the electric motor 1 can be transmitted to the outer attachment point 25 of the drive spring.

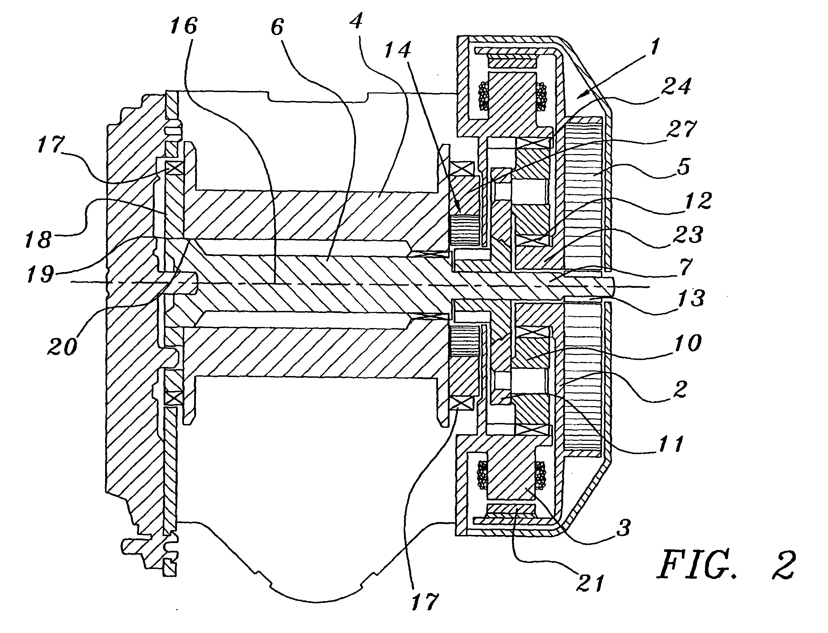

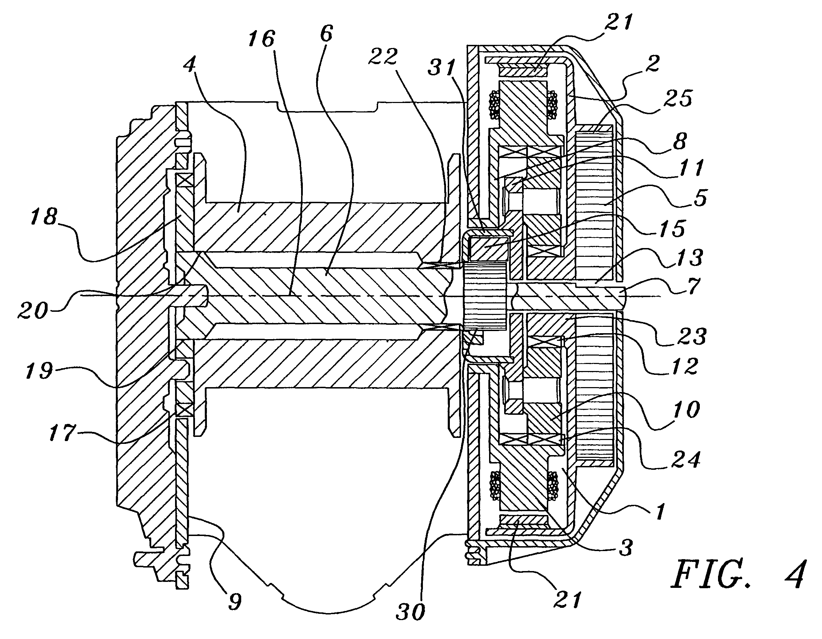

In the embodiments illustrated in Figures 2 and 4 the drive spring 5 is disposed outside the rotor 2 which is of a cap-shaped configuration. The spring casing in which the drive spring is arranged can be formed or shaped on the rotor or it can be non-rotatably joined to the rotor. The spring core or tongue portion 13 is non-rotatably connected to the axial extension portion 7 of the torsion bar 6. In the embodiments of Figures 2 and 4 that extension portion extends through the rotor. The spring core or tongue portion 13 is connected to the part of the extension portion, which projects through the rotor.

The outer attachment point 25 of the drive spring 5 is directly connected to the rotor 2. That can be effected by the spring casing to which the outer attachment point of the drive spring is mounted being non-rotatably connected to the rotor. It is however also possible for a casing-like spring-receiving means to be formed or shaped integrally on the rotor, in which case the outer attachment point 25 is provided on that spring-receiving means on the rotor.

As already described in relation to the embodiment of Figure 1 the torque which is produced by the electric motor 1 is caused to act on the drive spring 5. In this respect, the return force of the drive spring can be adjusted in the same manner as already discussed above for achieving the required level of comfort and convenience in terms of wearing the seatbelt webbing. The drive spring 5 can also be wound to a blocked condition and the functions, described in connection with the embodiment of Figure 1, of seatbelt pretensioning in a pre-crash situation or influencing the load-limiting behaviour of the torsion bar 6 can be implemented.

It is however also possible to provide additional clutches, as are shown in the embodiments of Figures 2 and 4.

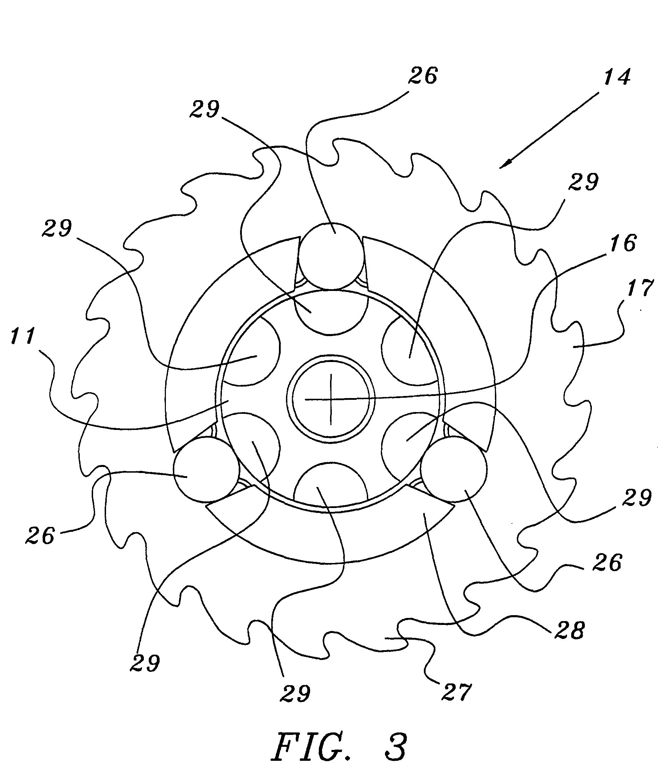

In the embodiment shown in Figure 2, provided between the belt reel 4 and the epicyclic gear carrier 11 is a clutch 14 which is diagrammatically shown in plan in Figure 3. The clutch is a roller-type clutch. In the normal mode of seatbelt retractor operation clutch rollers 26 are disposed in a radially outward position with respect to the axis 16 of the belt reel. In that position, the clutch rollers are released from the epicyclic gear carrier 11 and connect a ring 27 carrying the blocking tooth arrangement 17 to an annular body flange 28 which is formed integrally on the end face of the belt reel 4 and extends around the axis 16. In that position, the blocking tooth arrangement is non-rotatably connected to the belt reel. The clutch rollers assume that position in normal operation of the seatbelt retractor. In this embodiment, the belt reel 4 can be blocked at both sides in the two blocking tooth arrangements 17, in normal operation of the seatbelt retractor. In the event of a crash blocking pawls engage into the two blocking tooth arrangements, possibly after implementing full-power tensioning of the seatbelt. Upon forward displacement of the vehicle occupant into the seatbelt which is blocked to prevent belt webbing extension, a relative rotary movement occurs between the ring 27 and the flange 28, and that relative rotary movement causes the clutch rollers 26 to be moved radially inwardly with respect to the axis 16, in known manner, as is described for example in DE 196 47 841 A1, so that the clutch rollers come into engagement into corresponding openings 29 in the epicyclic gear carrier 11 or an output drive portion integrally connected thereto. In that radially inward position the epicyclic gear carrier or the output drive portion which is integrally or non-rotatably connected thereto and the flange 28, that is to say the belt reel 4, are non-rotatably coupled together.

In Figure 2 the left-hand end of the torsion bar 6, as already discussed above, is prevented from rotating by the fixed mounting 19 and the blocked blocking disc 18. At the right-hand side (spring side) there is the positively locking connection 22 between the belt reel 4 and the torsion bar. The belt reel can rotate with respect to the blocked ring 27. In addition, the load-limiting action of the torsion bar can be influenced by a torque produced by the electric motor 1 by the planetary transmission arrangement, by virtue of the clutch engagement between the flange 28 and the epicyclic gear carrier. Rotary movement of the belt reel with respect to the torsion bar is made possible by virtue of the loose mounting 20 at the left-hand side of the belt reel. The load-limiting action of the torsion bar 6 can be influenced by the torque furnished by the electric motor 1, by the clutch engagement and the positively locking connection 22 between the belt reel 4 and the torsion bar.

The embodiment shown in Figure 4 also involves the use of a clutch 15 which is engaged by virtue of the relative rotary movement of two parts which are to be connected together. In this case, it is possible to use a clutch pawl as is known for example from DE 35 31 856 A1. A coupling engagement is produced by the clutch 15 between the epicyclic gear carrier 11 which transmits the torque of the electric motor 1 and a clutch tooth arrangement 30 provided at the periphery of the torsion bar 6, when the epicyclic gear carrier is turned by the electric motor with respect to the torsion bar. Possibly, that can provide for transmission of a torque which is required for a pretensioning effect by the torsion bar and the positively locking connection 22 between the torsion bar 6 and the winding shaft 4, to the winding shaft. The clutch 15 can operate in the manner described in DE 198 44 092 A1. For that purpose the clutch pawl is disposed in a clutch housing 31 which is non-rotatably connected to the epicyclic gear carrier 11.

Furthermore, upon clutch engagement, the torque supplied by the electric motor 1 can be used additively in relation to the load-limiting effect of the torsion bar 6. As also in the case of the embodiments of Figures 1 and 2, it is possible in that way to provide for a characteristic curve-controlled force-limitation effect in dependence on the severity of a crash the body weight and dimensions of the vehicle occupants.

## Claims

1. A seatbelt retractor comprising a belt reel (4) for a seatbelt, which is mounted on a frame rotatably about an axis (16), a drive spring (5) which drives the belt reel (4) in the winding-on direction, a blocking device for blocking the belt reel to prevent belt webbing extension, an electric motor (1) influencing functions effected by the drive spring (5), and a rotor (2) which is arranged concentrically with respect to the axis (16) of the belt reel (4) at the spring side of the seatbelt retractor and which for adjustment of the force of the drive spring (5) is rotatably connected to at least one of the two ends of the drive spring (5), **characterized in that** arranged in the axis (16) of the belt reel (4) as a load limiting means is a torsion bar (6) having an extension portion (7) which extends in the axial direction and on which the rotor (2) is mounted, that the rotor (2) is in the form of the rotor of the electric motor (1) whose stator (3) is arranged in concentric relationship with the axis (16) of the belt reel (4), that disposed in the rotor (2) is a planetary transmission arrangement (10; 12) with which the torque of the rotor (2) can be transmitted to the torsion bar (6) and/or the belt reel (4) and that the torque supplied by the electric motor (1) is transmitted by a clutch (15) to the torsion bar (6) and/or the belt reel (4).

2. A seatbelt retractor according to claim 1 **characterized in that** the electric motor (1) is supported at the stator side on the frame (9) of the seatbelt retractor.

3. A seatbelt retractor according to claim 1 **characterized in that** an epicyclic gear carrier (11) of the transmission arrangement (10; 12) is rotatably supported on the axial extension portion (7) of the torsion bar (6).

4. A seatbelt retractor according to one of claims 1 to 3 **characterized in that** the drive spring (5) can be wound to a blocked condition by the electric motor (1).

5. A seatbelt retractor according to one of claims 1 to 4 **characterized in that** the drive spring (5) when wound to a blocked condition non-rotatably connects the rotor (2; 32) to the torsion bar (6) and/or the belt reel (4).

6. A seatbelt retractor according to one of claims 1 to 5 **characterized in that** the torque of the rotor (2; 32) can be additively and/or subtractively transmitted by the planetary transmission arrangement (10; 12) to the torsion bar (6) and/or the belt reel (4).

7. A seatbelt retractor according to one of claims 1 to 6 **characterized in that** the drive spring (5) is arranged between the rotor (2; 32) and the torsion bar (6).

8. A seatbelt retractor according to claim 7 **characterized in that** a spring core portion (13) of the drive spring (5) is non-rotatably connected to the torsion bar (6).

9. A seatbelt retractor according to claim 7 or claim 8 **characterized in that** the torque of the rotor (2; 32) can be transmitted by the planetary transmission arrangement (10; 12) to the drive spring (5).

10. A seatbelt retractor according to one of claims 1 to 9 **characterized in that** a sun gear (12) of the planetary transmission arrangement (10; 12) is non-rotatably connected to the rotor (2; 32).

11. A seatbelt retractor according to one of claims 1 to 10 **characterized in that** the rotor (2; 32) is of a cap-shaped configuration and encloses the stator (3) and the planetary transmission arrangement (10; 12).

12. A seatbelt retractor according to claim 11 **characterized in that** the drive spring (5) is arranged within the cap-shaped rotor (2; 32).

13. A seatbelt retractor according to claim 11 or claim 12 **characterized in that** the drive spring (5) is arranged at the outside of the cap-shaped rotor (2; 32) and is non-rotatably connected by the spring core portion (13) to the axial extension portion (7), which is guided through the rotor (2; 32), of the torsion bar (6).

14. A seatbelt retractor according to one of claims 1 to 13 **characterized in that** the torque supplied by the electric motor (1) can be transmitted by a clutch (14; 15) to the torsion bar (6) and/or the belt reel (4).

15. A seatbelt retractor according to claim 14 **characterized in that** the clutch (14; 15) can be engaged for a combined load-limiting effect of torsion bar (6) and electric motor (1).

16. A seatbelt retractor according to one of claims 1 to 15 **characterized in that** the electric motor (1) is actuable in dependence on a pre-crash sensor and/or crash related data and/or vehicle occupant related data and/or belt webbing-wearing comfort.

17. A seatbelt retractor according to one of claims 1 to 16 **characterized in that** the rotor (2; 32) is selectively controllable in driving relationship with the drive spring (5), the torsion bar (6) and the belt reel (4).

18. A seatbelt retractor according to one of claims 1 to 17 **characterized in that** a self-locking retaining device (36) operatively acts on the rotor (32).

## Patentansprüche

1. Sicherheitsgurtaufroller, der folgendes umfaßt: eine Gurtspule (4) für einen Sicherheitsgurt, die an einem Rahmen um eine Achse (16) drehbar angebracht wird, eine Triebfeder (5), welche die Gurtspule (4) in der Aufwickelrichtung antreibt, eine Sperrvorrichtung zum Sperren der Gurtspule, um ein Ausgeben von Sicherheitsgurtband zu verhindern, einen Elektromotor (1), der die durch die Triebfeder (5) ausgeübten Funktionen beeinflußt, und einen Rotor (2), der an der Federseite des Sicherheitsgurtaufrollers konzentrisch im Verhältnis zur Achse (16) der Gurtspule (4) angeordnet wird und der zum Einstellen der Kraft der Triebfeder (5) drehbar mit wenigstens einem der zwei Enden der Triebfeder (5) verbunden wird, **dadurch gekennzeichnet, daß** in der Achse (16) der Gurtspule (4) als Lastbegrenzungsmittel ein Torsionsstab (6) mit einem erweiterten Abschnitt (7) angeordnet wird, der in der Axialrichtung verläuft und auf dem der Rotor (2) angebracht wird, daß der Rotor (2) die Form des Rotors des Elektromotors (1) hat, dessen Stator (3) in einer konzentrischen Beziehung mit der Achse (16) der Gurtspule (4) angeordnet wird, daß in dem Rotor (2) eine Planetengetriebe-Anordnung (10; 12) angeordnet wird, mit der das Drehmoment des Rotors (2) auf den Torsionsstab (6) und/oder die Gurtspule (4) übertragen werden kann, und daß das durch den Elektromotor ( 1 ) bereitgestellte Drehmoment durch eine Kupplung (15) auf den Torsionsstab (6) und/oder die Gurtspule (4) übertragen wird.

2. Sicherheitsgurtaufroller nach Anspruch 1, **dadurch gekennzeichnet, daß** der Elektromotor (1) an der Statorseite auf dem Rahmen (9) des Sicherheitsgurtaufrollers abgestützt wird.

3. Sicherheitsgurtaufroller nach Anspruch 1, **dadurch gekennzeichnet, daß** ein Umlaufgetriebeträger (11) der Getriebeanordnung (10; 12) drehbar auf dem axialen Erweiterungsabschnitt (7) des Torsionsstabs (6) abgestützt wird.

4. Sicherheitsgurtaufroller nach einem der Ansprüche 1 bis 3, **dadurch gekennzeichnet, daß** die Triebfeder (5) durch den Elektromotor (1) in einen gesperrten Zustand gewickelt werden kann.

5. Sicherheitsgurtaufroller nach einem der Ansprüche 1 bis 4, **dadurch gekennzeichnet, daß** die Triebfeder (5), wenn sie in einen gesperrten Zustand gewickelt wird, den Rotor (2; 32) drehfest mit dem Torsionsstab (6) und/oder der Gurtspule (4) verbindet.

6. Sicherheitsgurtaufroller nach einem der Ansprüche 1 bis 5, **dadurch gekennzeichnet, daß** das Drehmoment des Rotors (2; 32) durch die Planetengetriebe-Anordnung (10; 12) additiv und/oder subtraktiv auf den Torsionsstab (6) und/oder die Gurtspule (4) übertragen werden kann.

7. Sicherheitsgurtaufroller nach einem der Ansprüche 1 bis 6, **dadurch gekennzeichnet, daß** die Triebfeder (5) zwischen dem Rotor (2; 32) und dem Torsionsstab (6) angeordnet wird.

8. Sicherheitsgurtaufroller nach Anspruch 7, **dadurch gekennzeichnet, daß** ein Federkernabschnitt (13) der Triebfeder (5) drehfest mit dem Torsionsstab (6) verbunden wird.

9. Sicherheitsgurtaufroller nach Anspruch 7 oder Anspruch 8, **dadurch gekennzeichnet, daß** das Drehmoment des Rotors (2; 32) durch die Planetengetriebe-Anordnung (10; 12) auf die Triebfeder (5) übertragen werden kann.

10. Sicherheitsgurtaufroller nach einem der Ansprüche 1 bis 9, **dadurch gekennzeichnet, daß** ein Sonnenrad (12) der Planetengetriebe-Anordnung (10; 12) drehfest mit dem Rotor (2; 32) verbunden wird.

11. Sicherheitsgurtaufroller nach einem der Ansprüche 1 bis 10, **dadurch gekennzeichnet, daß** der Rotor (2; 32) eine kappenförmige Konfiguration hat und den Stator (3) und die Planetengetriebe-Anordnung (10; 12) umschließt.

12. Sicherheitsgurtaufroller nach Anspruch 11, **dadurch gekennzeichnet, daß** die Triebfeder (5) innerhalb des kappenförmigen Rotors (2; 32) angeordnet wird.

13. Sicherheitsgurtaufroller nach Anspruch 11 oder Anspruch 12, **dadurch gekennzeichnet, daß** die Triebfeder (5) an der Außenseite des kappenförmigen Rotors (2; 32) angeordnet wird und durch den Federkernabschnitt (13) drehfest mit dem, durch den Rotor (2; 32) geführten, axialen Erweiterungsabschnitt (7) des Torsionsstabs (6) verbunden wird.

14. Sicherheitsgurtaufroller nach einem der Ansprüche 1 bis 13, **dadurch gekennzeichnet, daß** das durch den Elektromotor (1) bereitgestellte Drehmoment durch eine Kupplung (14; 15) auf den Torsionsstab (6) und/oder die Gurtspule (4) übertragen werden kann.

15. Sicherheitsgurtaufroller nach Anspruch 14, **dadurch gekennzeichnet, daß** die Kupplung (14; 15) für eine kombinierte lastbegrenzende Wirkung des Torsionsstabs (6) und des Elektromotors (1) eingerückt werden kann.

16. Sicherheitsgurtaufroller nach einem der Ansprüche 1 bis 15, **dadurch gekennzeichnet, daß** der Elektromotor (1) in Abhängigkeit von einem Voraufprallsensor und/oder von aufprallrelevanten Daten und/oder von fahrzeuginsassenrelevanten Daten und/oder vom Sicherheitsgurtband-Tragekomfort betätigt werden kann.

17. Sicherheitsgurtaufroller nach einem der Ansprüche 1 bis 16, **dadurch gekennzeichnet, daß** der Rotor (2; 32) selektiv in einem Antriebsverhältnis mit der Triebfeder (5), dem Torsionsstab (6) und der Gurtspule (4) gesteuert werden kann.

18. Sicherheitsgurtaufroller nach einem der Ansprüche 1 bis 17, **dadurch gekennzeichnet, daß** eine selbstsperrende Haltevorrichtung (36) wirksam auf den Rotor (32) wirkt.

## Revendications

1. Rétracteur de ceinture de sécurité comprenant une bobine de ceinture (4) pour une ceinture de sécurité, montée dans un cadre pouvant tourner autour d'un axe (16), un ressort d'entraînement (5) entraînant la bobine de la ceinture (4) dans la direction d'enroulement, un dispositif de blocage pour bloquer la bobine de la ceinture pour empêcher une extension de la sangle de la ceinture, un moteur électrique (1) influençant les fonctions effectuées par le ressort d'entraînement (5) et un rotor (2) agencé de manière concentrique par rapport à l'axe (16) de la bobine de la ceinture (4) au niveau du côté du ressort du rétracteur de la ceinture de sécurité et connecté par rotation à au moins une des deux extrémités du ressort d'entraînement (5) en vue d'ajuster la force du ressort d'entraînement (5), **caractérisé en ce qu'**une barre de torsion (6), faisant fonction de moyen de limitation de la charge, comportant une partie d'extension (7) s'étendant dans la direction axiale et sur laquelle est monté le rotor (2), est agencée dans l'axe (16) de la bobine de la ceinture (4), le rotor (2) constituant le rotor du moteur électrique (1) dont le stator (3) est agencé de manière concentrique par rapport à l'axe (16) de la bobine de la ceinture (4), un dispositif de transmission planétaire (10; 12) permettant la transmission du couple du rotor (2) vers la barre de torsion (6) et/ou la bobine de la ceinture (4) étant agencé dans le rotor (2), le couple produit par le moteur électrique (1) étant transmis par un embrayage (15) à la barre de torsion (6) et/ou à la bobine de la ceinture (4).

2. Rétracteur de ceinture de sécurité selon la revendication 1, **caractérisé en ce que** le moteur électrique (1) est supporté au niveau du côté du stator sur le cadre (9) du rétracteur de la ceinture de sécurité.

3. Rétracteur de ceinture de sécurité selon la revendication 1, **caractérisé en ce qu'**un support d'engrenage épicycloïdal (11) du dispositif de transmission (10; 12) est supporté par rotation sur la partie d'extension axiale (7) de la barre de torsion (6).

4. Rétracteur de ceinture de sécurité selon l'une des revendications 1 à 3, **caractérisé en ce que** le ressort d'entraînement (5) peut être enroulé dans un état bloqué par le moteur électrique (1).

5. Rétracteur de ceinture de sécurité selon l'une des revendications 1 à 4, **caractérisé en ce que** lors de son enroulement dans un état bloqué, le ressort d'entraînement connecte le rotor (2; 32) de manière non rotative à la barre de torsion (6) et/ou à la bobine de la ceinture (4).

6. Rétracteur de ceinture de sécurité selon l'une des revendications 1 à 5, **caractérisé en ce que** le couple du rotor (2; 32) peut être transmis par addition et/ou soustraction par le dispositif de transmission planétaire (10; 12) à la barre de torsion (6) et/ou à la bobine de la ceinture (4).

7. Rétracteur de ceinture de sécurité selon l'une des revendications 1 à 6, **caractérisé en ce que** le ressort d'entraînement (5) est agencé entre le rotor (2; 32) et la barre de torsion (6).

8. Rétracteur de ceinture de sécurité selon la revendication 7, **caractérisé en ce qu'**une partie de noyau de ressort (13) du ressort d'entraînement (5) est connectée de manière non rotative à la barre de torsion (6).

9. Rétracteur de ceinture de sécurité selon les revendications 7 ou 8, **caractérisé en ce que** le couple du rotor (2; 32) peut être transmis par le dispositif de transmission planétaire (10; 12) au ressort d'entraînement (5).

10. Rétracteur de ceinture de sécurité selon l'une des revendications 1 à 9, **caractérisé en ce qu'**une roue solaire (12) du dispositif de transmission planétaire (10; 12) est connectée de manière non rotative au rotor (2; 32).

11. Rétracteur de ceinture de sécurité selon l'une des revendications 1 à 10, **caractérisé en ce que** le rotor (2; 32) a une configuration en capuchon et renferme le stator (3) et le dispositif de transmission planétaire (10; 12).

12. Rétracteur de ceinture de sécurité selon la revendication 11, **caractérisé en ce que** le ressort d'entraînement (5) est agencé dans le rotor en forme de capuchon (2; 32).

13. Rétracteur de ceinture de sécurité selon les revendications 11 ou 12, **caractérisé en ce que** le ressort d'entraînement (5) et agencé au niveau de l'extérieur du rotor en forme de capuchon (2; 32) et est connecté de manière non rotative par la partie de noyau du ressort (13) à la partie d'extension axiale (7), guidée à travers le rotor (2; 32), de la barre de torsion (6).

14. Rétracteur de ceinture de sécurité selon l'une des revendications 1 à 13, **caractérisé en ce que** le couple produit par le moteur électrique (1) peut être transmis par un embrayage (14; 15) à la barre de torsion (6) et/ou à la bobine de la ceinture (4).

15. Rétracteur de ceinture de sécurité selon la revendication 14, **caractérisé en ce que** l'embrayage (14; 15) peut être engagé en vue d'assurer un effet combiné de limitation de la charge par la barre de torsion (6) et le moteur électrique (1).

16. Rétracteur de ceinture de sécurité selon l'une des revendications 1 à 15, **caractérisé en ce que** le moteur électrique (1) peut être actionné en réponse à un capteur de pré-collision et/ou à des données concernant une collision et/ou des données concernant un occupant du véhicule et/ou le confort au porter de la sangle de la ceinture.

17. Rétracteur de ceinture de sécurité selon l'une des revendications 1 à 16, **caractérisé en ce que** le rotor (2; 32) peut être contrôlé sélectivement dans une relation à entraînement avec le ressort d'entraînement (5), la barre de torsion (6) et la bobine de la ceinture (4).

18. Rétracteur de ceinture de sécurité selon l'une des revendications 1 à 17, **caractérisé en ce qu'**un dispositif de retenue à blocage automatique (36) agit en service sur le rotor (32).
